# EUROPEAN PATENT APPLICATION

(11) **EP 4 811 106 A1**
(43) Date of publication of application: **23.09.2026**
(21) Application number: 26152173.6
(22) Date of filing: 15.01.2026
(51) Int. Cl.: G06F 3/12

(54) **PRINTER, INFORMATION PROCESSING METHOD, AND COMPUTER-READABLE MEDIUM**

(30) Priority: 19.03.2025 JP 2025044774
(71) Applicant: ETRIA Co., Ltd., Yokohama Kanagawa (JP)
(72) Inventor: TSUCHIMOTO, Hiroshi, Yokohama 220-0011 (JP)
(74) Representative: J A Kemp LLP

(57) **Abstract**

A printer includes a setter, a searcher, and a receiver. The setter is configured to set attribute information to a parent when the printer is a parent device configured to transmit update data to a different printer, and set the attribute information to a child when the printer is a child device configured to receive the update data from a different printer. The searcher is configured to search for a different printer serving as the parent device in a case where the setter sets the attribute information to the child. The receiver is configured to receive the update data from a different printer serving as the parent device searched by the searcher. The setter is configured to set the attribute information to the parent in a case where the receiver completes reception of the update data and update.

## Description

### BACKGROUND

### Technical Field

The present disclosure relates to a printer, an information processing method, and a computer-readable medium.

### Related Art

In the related art, when firmware and setting of an image forming apparatus such as a portable printer are updated, data for update (update data) is downloaded from the outside. In this case, the printer receives the update data from a host terminal such as a personal computer (PC), a different printer, the firmware and setting of which have already been updated, a network in which a mobile device management (MDM) system is introduced, or the like. Therefore, in order to update a plurality of printers, each of the printers is individually connected to the host terminal or the like, and an advanced management system such as MDM is introduced into each of the printers.

### BRIEF DESCRIPTION OF THE DRAWINGS

FIG. 1 is a system configuration diagram including a printer according to a first embodiment;
FIG. 2 is a hardware configuration diagram of the printer according to the first embodiment;
FIG. 3 is a functional block diagram of the printer according to the first embodiment;
FIG. 4 is a diagram illustrating an example of items of setting information and setting values;
FIG. 5 is a diagram illustrating an example of identification information;
FIG. 6 is a flowchart illustrating an example of a procedure of update processing in a parent device;
FIG. 7 is a flowchart illustrating an example of a procedure of update processing in a child device;
FIGS. 8A to 8C are diagrams illustrating an example of setting information in a case where update is executed by the child device;
FIG. 9 is a functional block diagram of a printer according to a second embodiment;
FIG. 10 is a flowchart illustrating a procedure of attribute information setting processing according to the second embodiment; and
FIGS. 11A to 11C are diagrams illustrating an example of setting information in a case where a new update is executed in the parent device.

### DETAILED DESCRIPTION

A printer according to an embodiment includes a setter, a searcher, and a receiver. The setter is configured to set attribute information to a parent when the printer is a parent device configured to transmit update data to a different printer, and set the attribute information to a child when the printer is a child device configured to receive the update data from a different printer. The searcher is configured to search for a different printer serving as the parent device in a case where the setter sets the attribute information to the child. The receiver is configured to receive the update data from a different printer serving as the parent device searched by the searcher. The setter is configured to set the attribute information to the parent in a case where the receiver completes reception of the update data and update.

An embodiment may provide a printer, an information processing method, and a computer-readable medium capable of easily receiving update data without being individually connected to a host terminal or the like or introducing an advanced management system.

An embodiment will be described in detail below with reference to the drawings.

### First Embodiment

Hereinafter, embodiments will be described in detail with reference to the drawings.

Hereinafter, an embodiment will be described using a printer as an example.

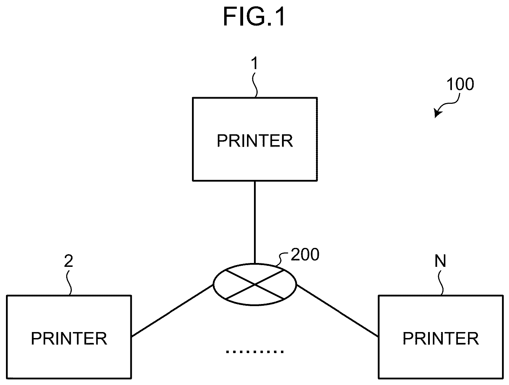

FIG. 1 is a system configuration diagram including a printer 1 according to a first embodiment. As illustrated in FIG. 1, a system 100 including the printer 1 includes printers 2 to N (N is an integer of 2 or more) similar to the printer 1, and a communication network 200 that connects the printers 1 to N to each other.

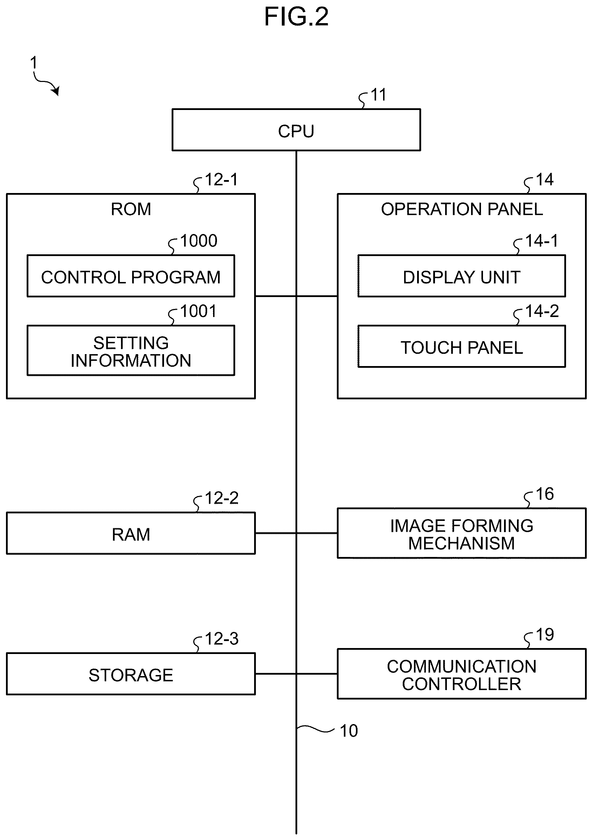

FIG. 2 is a hardware configuration diagram of the printer according to the first embodiment.

The hardware configuration diagram in FIG. 2 illustrates an example of a hardware configuration of the printer 1. As illustrated in FIG. 2, the printer 1 has a configuration in which a computer executes a computer-readable medium stored in a memory. As a configuration thereof, a central processing unit (CPU) 11, a read only memory (ROM) 12-1, a random access memory (RAM) 12-2, and a storage 12-3 are included. The CPU 11, the ROM 12-1, the RAM 12-2, and the storage 12-3 are mutually communicably connected to each other via a bus 10.

The CPU 11 executes a control program 1000 stored in the ROM 12-1 to control each unit of the printer 1. The RAM 12-2 is used as a work space by the CPU 11. For example, the RAM 12-2 is used as a work space for temporarily storing data to be processed by the CPU 11. The storage 12-3 is a rewritable nonvolatile storage device, and may be a so-called ROM, a solid state drive (SSD), or a hard disk drive (HDD).

The ROM 12-1 stores setting information 1001 in addition to the control program 1000. The control program 1000 includes software and firmware necessary for controlling the printer 1. The setting information 1001 includes information of various settings used in the printer 1, a serial number of a device, a fixed IP address, information of a setting screen to be described later, and the like.

In addition, an operation panel 14, an image forming mechanism 16, a communication controller 19, and the like are connected to the bus 10.

The operation panel 14 is an operation panel provided in the main body of the printer 1 and receives an operation by a user.

As an example, the operation panel 14 includes a display unit 14-1 and a touch panel 14-2. The display unit 14-1 is a display such as a liquid crystal, and displays a setting screen instructed by the CPU 11 on the display. The touch panel 14-2 detects a touch position of the user on the display. As the touch panel 14-2, a capacitive touch panel may be employed, an infrared touch panel may be employed, or a touch panel of another type may be employed.

The user can input and change various settings used in the printer 1 using the setting screen.

The image forming mechanism 16 forms an image on a sheet. The image forming mechanism 16 forms an image on a sheet by heating a thermosensitive medium with, for example, a thermal head. It is noted that the image forming mechanism 16 is not limited to the configuration including the thermal head. Other methods such as an inkjet method may be used.

The communication controller 19 is a controller for transmitting and receiving data to and from a communication destination device. The communication controller 19 performs communication by, for example, infrared communication such as IrDA, universal serial bus (USB), local area network (LAN), RS-232C, Bluetooth (registered trademark), or the like.

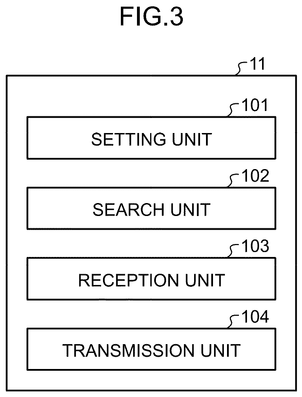

FIG. 3 is a functional block diagram of the printer 1 according to the first embodiment. As illustrated in FIG. 3, the CPU 11 of the printer 1 illustrated in FIG. 2 functions as a setting unit (setter) 101, a search unit (searcher) 102, a reception unit (receiver) 103, and a transmission unit (transmitter) 104.

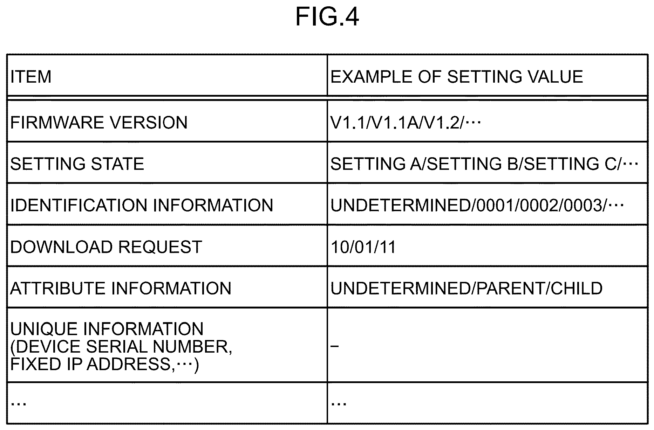

The setting unit 101 sets the setting information 1001 of the printer 1. FIG. 4 is a diagram illustrating an example of items and setting values of the setting information 1001. The items of the setting information 1001 include a firmware version, a setting state, identification information, a download request, attribute information, unique information, and the like.

A setting value of a firmware version is a value indicating a version number of the firmware, and is, for example, "V1.1", "V1.1A", "V1.2", or the like. The setting state is a value indicating the setting state of various setting values, and is, for example, "setting A", "setting B", "setting C", or the like.

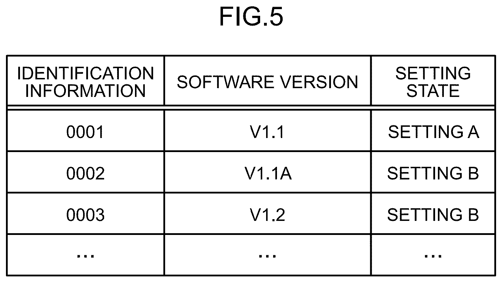

The setting value of the identification information is a value for identifying a combination of the firmware version and the setting state, and a unique value is allocated to each combination. FIG. 5 is a diagram illustrating an example of the identification information. In this example, 0001 is allocated as the identification information when the combination is (V1.1, setting A), 0002 is allocated when the combination is (V1.1A, setting B), and 0003 is allocated when the combination is (V1.2, setting B).

The setting value of the download request is any one of 10 (firmware), 01 (setting), and 11 (firmware and setting). When the printer 1 is a child device, any one of these values is set, and download of corresponding update data is requested.

The setting value of the attribute information is any one of "undetermined", "parent", and "child". When the printer 1 is a parent device that transmits data (update data) for updating firmware and various settings to a different printer, the setting unit 101 sets the attribute information to a "parent", and when the printer 1 is a child device that receives update data from a different printer, the setting unit 101 sets the attribute information to a "child". When the printer 1 is neither the parent device nor the child device, the setting unit 101 sets the attribute information to "undetermined".

The unique information includes the serial number of the device, the fixed IP address, and the like, but these pieces of information are excluded from a setting update target. In the present embodiment, since the printer 1 has been connected to the communication network 200, it is not necessary to update information necessary for connection.

When the setting unit 101 sets the attribute information to the "child" (when the printer 1 is the child device), the search unit 102 searches for a different printer serving as the parent device. More specifically, data (attribute inquiry) for inquiring of a printer, the attribute information of which is set to the "parent", is generated, and is simultaneously transmitted to the communication network 200 via the transmission unit 104.

The reception unit 103 receives (downloads) update data from a different printer serving as the parent device searched by the search unit 102. The reception unit 103 receives update data from the parent device through, for example, a peer to peer connection.

When the setting unit 101 sets the attribute information to the "parent" (when the printer 1 is the parent device), the reception unit 103 receives an attribute inquiry or a download request from a different printer that is a child device. Further, when the attribute information is "undetermined", the reception unit 103 receives update data from an external host terminal or the storage 12-3. It is noted that the update data to be downloaded is firmware update data when the installation value of the download request is 10, setting update data when the installation value of the download request is 01, and firmware and setting update data when the installation value of the download request is 11.

In the case of the parent device, the transmission unit 104 transmits response data according to the attribute inquiry, transmits update data according to the setting value of the download request, and the like. The transmission unit 104 transmits update data to the child device through, for example, a peer-to-peer connection. It is noted that the present embodiment may be configured such that the download request has only one value (for example, 11). In this case, the transmission unit 104 transmits firmware and setting update data to the child device in response to a download request from the child device.

Further, in the case of a child device, the transmission unit 104 performs simultaneous transmission of an attribute inquiry generated by the search unit 102, transmission of a download request to the parent device searched by the search unit 102, and the like.

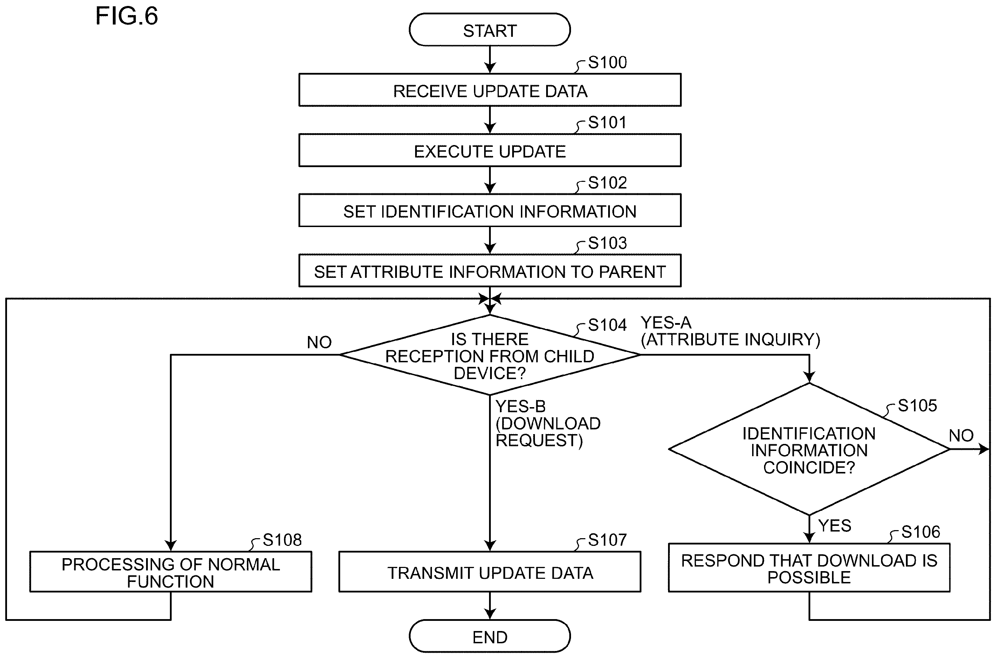

Next, the update processing according to the present embodiment will be described with reference to FIGS. 6 to 8C.

FIG. 6 is a flowchart illustrating an example of a procedure of update processing in a parent device. First, the reception unit 103 receives update data (Step S100), and receives update of firmware and setting (Step S101). The processing may be performed, for example, by a user via a host terminal or by allowing a user to use the storage 12-3 in which the update data is recorded.

Next, the setting unit 101 sets identification information according to a combination of an updated firmware version and a setting state (Step S102), and sets attribute information to a "parent" (Step S103).

When data that is received from a different printer serving as a child device by the reception unit 103 is an attribute inquiry (Step S104: Yes-A), the processing proceeds to Step S105. Then, when identification information included in the received attribute inquiry coincides with identification information set by the setting unit 101 (Step S105: Yes), the transmission unit 104 transmits firmware corresponding to the identification information included in the attribute inquiry and response data indicating that the setting can be downloaded (Step S106).

On the other hand, when the identification information included in the received attribute inquiry does not coincide with the identification information set by the setting unit 101 (Step S105: No), the processing returns to Step S104. It is noted that the present embodiment may be configured to respond to the child device without using the identification information. In this case, for example, when the parent device has the latest update data, the update data may be configured to be downloaded to a different child device regardless of the identification information.

When the data received by the reception unit 103 from a different printer serving as a child device is a download request (Step S104: Yes-B), the transmission unit 104 transmits update data to the child device (Step S107). At this time, the transmission unit 104 transmits firmware update data, setting update data, firmware, and setting update data according to the type of the received download request.

When data is not received from a different printer serving as the child device (Step S104: No), the printer 1 continues execution of processing of a normal function (a printer function or a copy function) (Step S108) and confirmation of reception from the child device (Step S104).

It is noted that the present embodiment may be configured to transmit update data regardless of the type of download request. In this case, for example, in a case where the parent device has the latest update data, all the new data may be configured to be downloaded to a different child device.

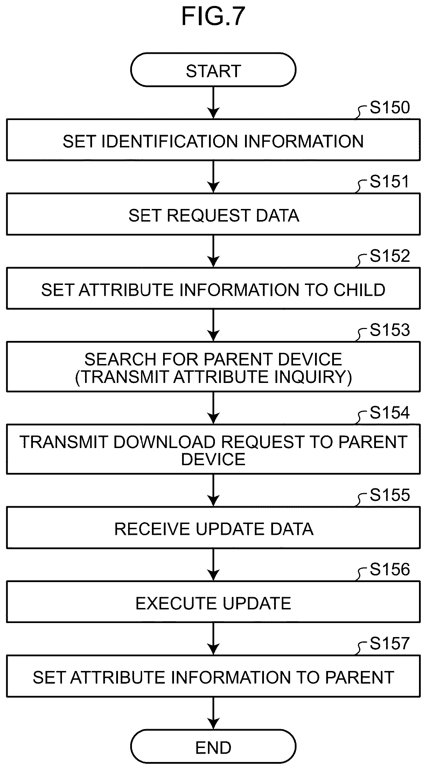

FIG. 7 is a flowchart illustrating an example of a procedure of update processing in a child device. First, the setting unit 101 sets identification information corresponding to a combination of an updated firmware version and a setting state (Step S150), sets request data (Step S151), and sets attribute information to a "child" (Step S152).

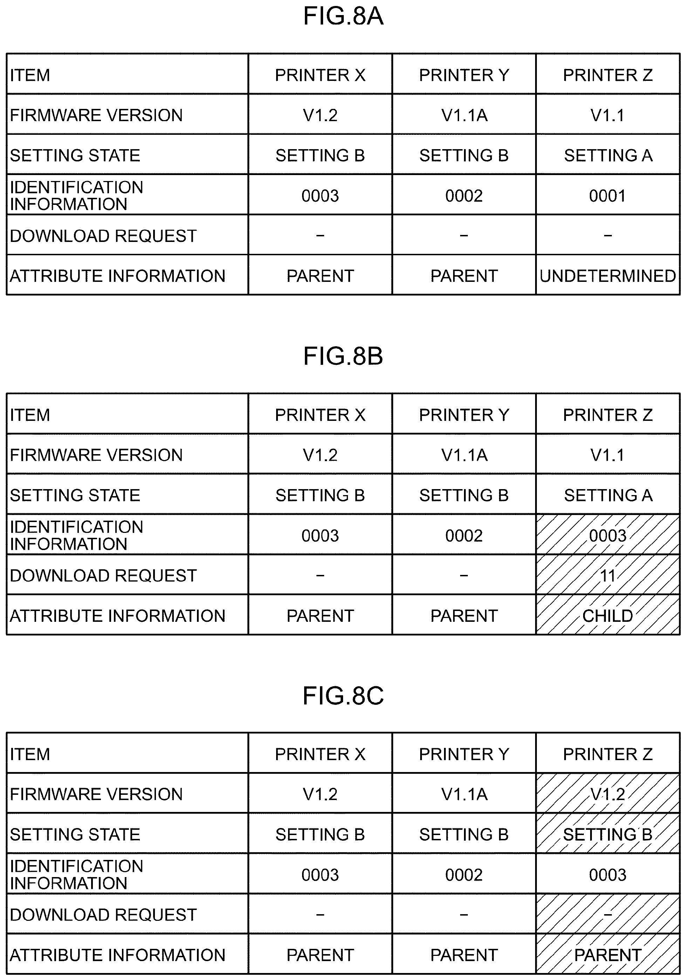

FIGS. 8A to 8C are diagrams illustrating an example of the setting information 1001 in a case where update is executed by the child device. Here, an example in which a printer Z is updated among three printers X, Y, and Z will be described.

FIG. 8A illustrates an example of the setting information 1001 before the update processing of the printer Z is started. At this time, in the printers X and Y, the identification information of the firmware and the setting is updated to a combination corresponding to 0003 and 0002, respectively, and the attribute information is set to the "parent". In the printer Z, the identification information of the firmware and the setting is 0001, but the attribute information is "undetermined". It is noted that "-" indicates that the setting value is not set.

FIG. 8B illustrates an example of the identification information set in Steps S150 to S152 of FIG. 7 after the update processing of the printer Z is started. In this example, the identification information of the printer Z is set to 0003, the download request is set to 11, and the attribute information is set to the "child".

Next, the search unit 102 generates data of the attribute inquiry, and searches for the parent device by simultaneously transmitting the attribute inquiry via the transmission unit 104 (Step S153 in FIG. 7). In the example of FIG. 8B, among the printers X and Y, the printer X, the identification information of which is 0003, responds to the attribute inquiry. It is noted that, when the printer X is in peer-to-peer connection with a different child device and is transmitting update data to the child device (Busy state), the printer Z waits for a response from a parent device that is not transmitting update data to a different child device. Therefore, the search unit 102 searches for a different printer serving as the parent device that is not transmitting the update data (not in the Busy state). It is noted that, in a case where the parent device that is not in the Busy state cannot be found, the search unit 102 searches for the parent device again after a lapse of a certain period of time, and continues search processing until the parent device responding to the download request is found.

Upon receiving the response data indicating that the data can be downloaded from the parent device, the transmission unit 104 transmits the download request to the parent device (Step S155) and executes update (Step S156). When the update is completed, the setting unit 101 sets the attribute information to the "parent" (Step S157). As a result, the printer Z can respond to, as a new parent device, the attribute inquiry or the download request from a different child device that needs to be updated to the identification information 0003.

FIG. 8C illustrates an example of the setting information 1001 after the update processing of the printer Z is completed. In this example, the firmware and the setting are updated, and the respective setting values are the same as the setting values of the printer X. In addition, the setting of the download request returns to the unset state, and the attribute information is set to the "parent". It is noted that, in the above description, the update target by the update data is not limited to firmware and setting, and may be software or the like.

As described above, according to the present embodiment, the update data can be easily received without individually connecting the printer to the host terminal or the like or introducing an advanced management system into the printer.

In addition, only by setting one printer as a parent device and setting a plurality of other printers as child devices, it is possible to easily update the child devices without introducing an advanced tool such as MDM.

In addition, the child device that has completed the update is automatically changed to the parent device, and the number of updated parent devices is increased. Therefore, even when a large number of printers are updated, the update can be completed in a short time.

### Second Embodiment

In a second embodiment, the attribute information is further changed to "undetermined" within a predetermined time limit after the setting unit 101 sets the attribute information to the "parent". Hereinafter, in the description of the second embodiment, description of the same portions as those of the first embodiment will be omitted, and portions different from those of the first embodiment will be described.

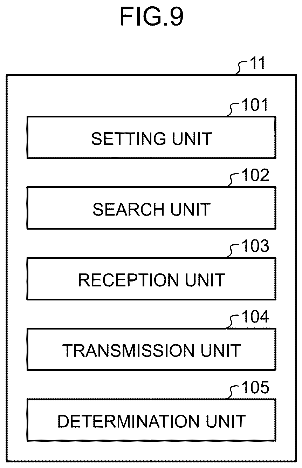

FIG. 9 is a functional block diagram of the printer 1 according to the second embodiment. A difference from FIG. 3 is that a determination unit (determiner) 105 is further included, and after the setting unit 101 sets the attribute information to the "parent", the attribute information is changed to "undetermined" according to a determination result of the determination unit 105.

The determination unit 105 determines whether a predetermined time limit has passed after the attribute information is set to be the parent device. For example, the determination unit 105 determines whether the current time has reached a predetermined time limit by setting, as the predetermined time limit, a predetermined date and time (12:00 on weekdays, 7:30 on holidays, 10:00 and 13:00 every day, and the like) after a predetermined time (3 hours, 6 hours, 12 hours, and the like) has elapsed since the attribute information is set to indicate the parent device. Here, the value of the predetermined time and the predetermined date and time are a value and a date and time determined in advance by experiments or the like. For example, the determination unit 105 may set, as a predetermined time limit, the date and time (for example, 13:40:15, March 19, 2025) designated from a setting screen or a host terminal communicating via the communication controller 19 and may determine whether the current time has reached the predetermined time limit.

When the determination unit 105 determines that the predetermined time limit has been reached, the setting unit 101 sets the attribute information to "undetermined".

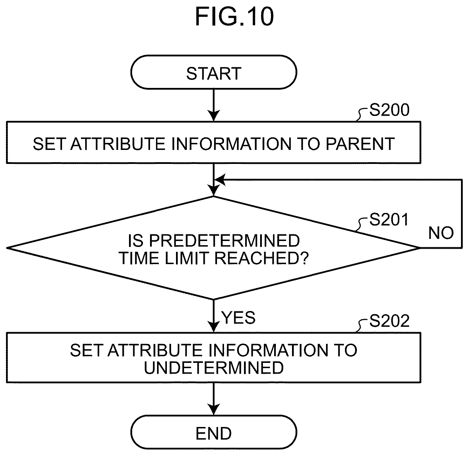

FIG. 10 is a flowchart illustrating a procedure of attribute information setting processing according to the second embodiment. It is noted that the procedure in FIG. 10 is started after the update of the child device is executed in Step S156 of FIG. 7.

First, the setting unit 101 sets the attribute information to the "parent" (Step S200), and the determination unit 105 determines whether a predetermined time limit has passed. Then, when it is determined that the predetermined time limit has been reached (Step S201: Yes), the setting unit 101 sets the attribute information to "undetermined" (Step S202). That is, in the present embodiment, the attribute information set to the "parent" is changed to "undetermined" after a certain period of time elapses.

On the other hand, when it is determined that the predetermined time limit has not been reached (Step S201: No), the processing returns to Step S201 and continues the determination of the elapsed time.

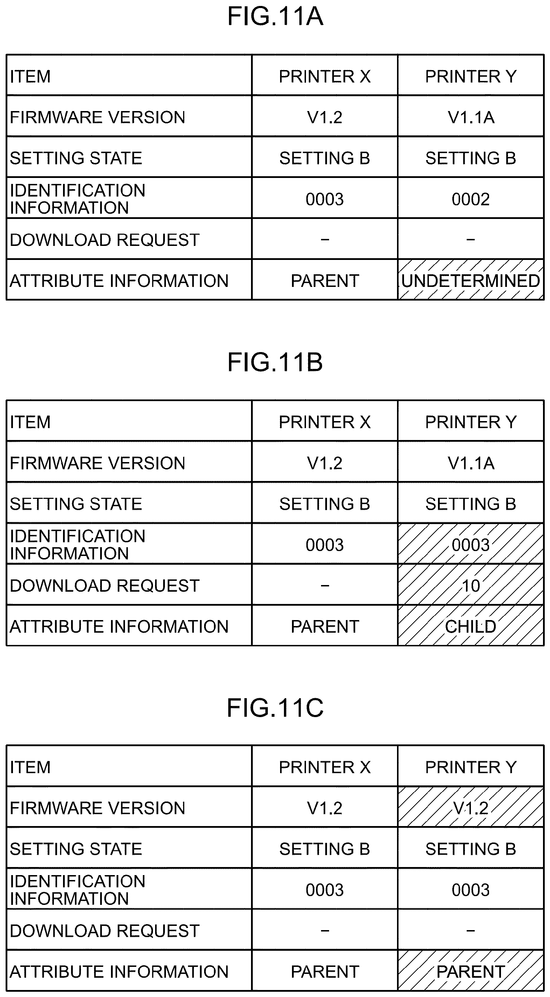

FIGS. 11A to 11C are diagrams illustrating an example of the setting information 1001 in a case where a new update is executed in the parent device. Here, an example in which the printer Y is updated among the two printers X and Y will be described.

FIG. 11A illustrates an example of the setting information 1001 in a case where the predetermined time limit has elapsed after the attribute information of the printer Y is set to the "parent". In this example, the attribute information of the printer Y serving as the parent device in FIGS. 8A to 8C is changed to "undetermined". As a result, the printer Y can receive the update data through the procedures of Steps S150 to S157 in FIG. 7.

FIG. 11B illustrates an example of the identification information set by Steps S150 to S152 in FIG. 7 after the update processing of the printer Y is started. In this example, the identification information of the printer Y is set to 0003, the download request is set to 10, and the attribute information is set to the "child".

FIG. 11C illustrates an example of the setting information 1001 after the update processing of the printer Y is completed. In this example, the firmware is updated using the update data received from the printer X, and the setting value thereof is the same as the setting value of the printer X. In addition, the setting of the download request returns to the unset state, and the attribute information is set to the "parent".

As described above, according to the present embodiment, since the attribute information set to the "parent" is changed to "undetermined" after the predetermined time limit elapses, it is possible to receive new update data.

The program executed by the printer 1 of each embodiment described above is provided by being recorded in a computer-readable recording medium such as a CD-ROM, a flexible disk (FD), a CD-R, and a digital versatile disk (DVD) as a file in an installable format or an executable format.

In addition, the program executed by the printer 1 of each embodiment may be stored in a computer connected to a network such as the Internet and may be provided by being downloaded via the network. In addition, the program executed by the printer 1 of each embodiment may be provided or distributed via a network such as the Internet.

In addition, the program of each embodiment may be provided by being incorporated in a ROM or the like in advance.

The program executed by the printer 1 of each embodiment has a module configuration including the above-described respective units (the setting unit 101, the search unit 102, and the like), and as actual hardware, the CPU (processor) reads and executes the program from the recording medium, so that the respective units are loaded and generated on a main storage device.

Any of the above-described apparatus, devices or units can be implemented as a hardware apparatus, such as a special-purpose circuit or device, or as a hardware/software combination, such as a processor executing a software program.

Further, as described above, any one of the above-described and other methods may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Each of the functions of the described embodiments, and any one of the above-described and other methods may be implemented by one or more processing circuits or circuitry. Processing circuitry includes a programmed processor, as a processor includes circuitry. A processing circuit includes devices such as an application specific integrated circuit (ASIC), digital signal processor (DSP), field programmable gate array (FPGA) and conventional circuit components arranged to perform the recited functions.

As used herein, the singular forms "a", "an" and "the" are intended to include the plural forms as well, unless the context clearly indicates otherwise.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A printer comprising:
a setter configured to set attribute information to a parent when the printer is a parent device configured to transmit update data to a different printer, and set the attribute information to a child when the printer is a child device configured to receive the update data from a different printer;
a searcher configured to search for a different printer serving as the parent device in a case where the setter sets the attribute information to the child; and
a receiver configured to receive the update data from a different printer serving as the parent device searched by the searcher, wherein
the setter is configured to set the attribute information to the parent in a case where the receiver completes reception of the update data and update.

2. The printer according to claim 1, wherein
the setter is further configured to set identification information of the update data, and
the searcher is configured to search for a different printer serving as the parent device in which identification information identical to the identification information set by the setter is set.

3. The printer according to claim 1, wherein the searcher is further configured to search for a different printer serving as the parent device that is not transmitting the update data.

4. The printer according to claim 1, further comprising a determiner configured to determine whether a predetermined time limit is reached after the attribute information is set to the parent device, wherein
the setter is configured to set the attribute information to undetermined in a case where the predetermined time limit is reached.

5. The printer according to any one of claims 1 to 4, further comprising a transmitter configured to, in a case where an inquiry of the attribute information is received from a different printer serving as the child device, and identification information included in the inquiry of the attribute information is identical with identification information set by the setter, transmit response data indicating that the transmitter is capable of transmitting update data corresponding to the identification information.

6. The printer according to claim 5, wherein the transmitter is configured to transmit the update data in response to a download request from a different printer serving as the child device after transmitting the response data.

7. The printer according to claim 2, wherein the setter is configured to set the identification information according to a combination of an updated firmware version and a setting state in a case where the receiver completes reception of the update data and update.

8. The printer according to claim 2, wherein the setter is configured to set the identification information according to a combination of an updated firmware version and a setting state, and set the attribute information to the child in a case where update processing is started.

9. The printer according to claim 4, wherein the predetermined time limit is a predetermined date and time after a predetermined time has elapsed since the attribute information is set to the parent.

10. An information processing method executed by a printer, the information processing method comprising:
setting attribute information to a parent when the printer is a parent device configured to transmit update data to a different printer, and setting the attribute information to a child when the printer is a child device configured to receive the update data from a different printer;
searching for a different printer serving as the parent device in a case where the attribute information is set to the child at the setting; and
receiving the update data from a different printer serving as the parent device searched at the searching, wherein
the attribute information is set to the parent in a case where reception of the update data and update are completed.

11. A computer-readable medium including programmed instructions that cause a computer to function as:
a setter configured to set attribute information to a parent when the printer is a parent device configured to transmit update data to a different printer, and set the attribute information to a child when the printer is a child device configured to receive the update data from a different printer;
a searcher configured to search for a different printer serving as the parent device in a case where the setter sets the attribute information to the child; and
a receiver configured to receive the update data from a different printer serving as the parent device searched by the searcher, wherein
the setter is configured to set the attribute information to the parent in a case where the receiver completes reception of the update data and update.

12. The computer-readable medium according to claim 11, wherein
the setter is further configured to set identification information of the update data, and
the searcher is configured to search for a different printer serving as the parent device in which identification information identical to the identification information set by the setter is set.

13. The computer-readable medium according to claim 11, wherein the searcher is further configured to search for a different printer serving as the parent device that is not transmitting the update data.

14. The computer-readable medium according to claim 11, wherein
the programmed instructions cause the computer to further function as a determiner configured to determine whether a predetermined time limit is reached after the attribute information is set to the parent device, and
the setter is configured to set the attribute information to undetermined in a case where the predetermined time limit is reached.

15. The computer-readable medium according to claim 11, wherein the programmed instructions cause the computer to further function a transmitter configured to, in a case where an inquiry of the attribute information is received from a different printer serving as the child device, and identification information included in the inquiry of the attribute information is identical with identification information set by the setter, transmit response data indicating that the transmitter is capable of transmitting update data corresponding to the identification information.
